# EUROPÄISCHE PATENTSCHRIFT

(11) **EP 1 265 499 B1**
(45) Veröffentlichungstag und Bekanntmachung des Hinweises auf die Patenterteilung: **30.11.2005**
(21) Anmeldenummer: 01913795.9
(22) Anmeldetag: 08.02.2001
(51) Int. Cl.: A23L 1/317, A23C 19/055, A22C 11/00

(54) **VERFAHREN ZUR HERSTELLUNG VON FLEISCHWAREN**
METHODS FOR PRODUCING MEAT PRODUCTS
PROCEDE POUR PRODUIRE DES PRODUITS CARNES

(30) Priorität: 08.02.2000 DE 10005446; 29.12.2000 DE 10065633
(43) Veröffentlichungstag der Anmeldung: 18.12.2002
(73) Patentinhaber: Drexel, Hans, 86381 Krumbach (DE)
(72) Erfinder: Drexel, Hans, 86381 Krumbach (DE)
(74) Vertreter: Huber, Bernhard
(86) Internationale Anmeldenummer: PCT/EP2001/001366
(87) Internationale Veröffentlichungsnummer: WO 2001/058285

(56) Entgegenhaltungen:
- EP-A- 0 478 526
- WO-A-99/21438
- DE-A- 2 127 202
- DE-C- 3 726 204

## Beschreibung

Die vorliegende Erfindung betrifft Fleischwaren, insbesondere Wurstwaren, die in einer Menge von 10 bis 75 Gew.-%, bezogen auf den Fleischanteil, Frischkäseerzeugnisse und 0,8 bis 2,0 Gew.-% Magermilchpulver enthalten, sowie Verfahren zu deren Herstellung.

Nach der Art der Herstellung und der verwendeten Zutaten unterscheidet man Rohwurstwaren, Brühwurstwaren und Kochwurstwaren. Rohwurstwaren werden aus rohem Material, in der Regel aus rohem Rind- oder Schweinefleisch, kernigem Speck, Salz und Gewürzen hergestellt. Dazu wird das Fleisch entbeint, soweit nötig von Sehnen befreit und in einer speziellen Schneidewanne mit rotierenden Messern (Kutter) zerkleinert, bis die richtige Körnung erreicht ist. Nach dem Zumischen von Salz und Gewürzen wird die Wurstmasse in Hüllen abgefüllt, welche atmungsaktiv, wasser-und dampfdurchlässig sowie elastisch sein müssen, da die Würste im Laufe der Reifung Wasser abgeben und schrumpfen. Die Rohwurstreifung sorgt für die gewünschte Säuerung, Aromabildung, Schnittfestigkeit und Haltbarkeit und wird normalerweise bei 15 bis 22 °C durchgeführt. Rohwurstwaren können auch zusätzlich geräuchert werden. Beispiele für Rohwürste sind Salami, Salsiz, Mettwurst.

Brühwurstwaren werden wie Rohwürste aus roh zerkleinertem Rind- oder Schweinefleisch, Speck sowie Salz und Gewürzen hergestellt. Beim Zerkleinern des Fleisches im Kutter wird feingestoßenes Eis zugefügt. Dieses kühlt die Wurstmasse (Brät) und sorgt für einen homogenen Fleischteig. Rote Brühwurstsorten werden unter Zusatz von Pökelsalz hergestellt, weiße Sorten sowie Bratwürste ausschließlich mit Kochsalz. Brühwürste unterscheiden sich danach, wie fein das Brät gekuttert wurde. Nach der Abfüllung werden die Wurstwaren zum Teil ebenfalls geräuchert und anschließend gebrüht. Beim Brühen in heißem Wasser oder heißem Wasserdampf gerinnt das Fleischeiweiß und erstarrt. Auf diese Weise wird die Schnittfestigkeit erreicht. Unter Brühwürste fallen u.a. Wiener Würstchen, Bratwurst, Mortadella und Weißwurst.

Kochwurstwaren werden überwiegend aus vorgekochtem oder vorgebrühtem Fleisch, Innereien, Speck und Schwarten hergestellt. Auch rohe Ausgangsmaterialien wie Blut oder Leber können verwendet werden. Nach dem Abfüllen in Wursthüllen werden die Wurstwaren nochmals gekocht, einige Sorten zusätzlich geräuchert. Kochwürste sind im Gegensatz zu Brühwürsten nur im erkalteten Zustand schnittfähig. Man unterteilt die Kochwürste in Leberwürste, Blutwürste und Sülzwürste.

Fleisch- und Wurstwaren werden heute nicht nur aus Rind- und Schweinefleisch hergestellt, sondern auch aus Geflügel. Weitere Fleischwaren umfassen Pasteten, Rouladen, Klopse, Frikadellen, Fleisch am Stück, z.B. Steak, Schinken, Innereien u.dgl.

Die beabsichtigte Geschmacksnote von Fleisch- und Wurstwaren wird entweder durch Räuchern oder durch Zugabe ausgewählter Gewürze erzielt. Als Gewürze dienen außer dem immer verwendeten Pökel- oder Kochsalz häufig Pfeffer, Zwiebeln, Knoblauch sowie andere Gewürze wie z.B. Muskatnuss, Majoran, Koriander, Nelken u.dgl.

Heutzutage ist ein geringer Fettgehalt bei Nahrungsmitteln und besonders bei Wurst- und Fleischwaren, die in Deutschland einen Mindestgehalt an Magerfleisch enthalten müssen, ein wichtiges Kriterium bei der Beurteilung der Qualität. Oft büßen fettarme Nahrungsmittel jedoch durch diesen Umstand an Geschmack ein.

Seit längerem ist man bestrebt, Nahrungsmittel, insbesondere Fleisch- und Wurstwaren mit einem möglichst geringen Fettgehalt herzustellen, indem man der Fleischmasse besonders magere Zutaten beimischte. Der Stand der Technik offenbart schon fettarme Wurstwaren, deren Fettgehalt durch Zugabe von Milchprodukten, insbesondere von gefrorener Milch (DE 26 39 177, DE 22 03 582, EP 0 366 822) oder Sauermilchprodukten (DD 153 567) oder Jogurt (DE 197 52 249 A1, DE 198 26 978 A1, WO 99/21438) verringert wurde, zeigt jedoch auch, dass derartige Verfahren mit Nachteilen behaftet sind. Dazu gehören ein feuchtes Aussehen, ungenügende Haltbarkeit, aufwendiges Herstellungsverfahren und geschmackliche Abänderungen.

Der Erfindung liegt daher die Aufgabe zugrunde, Fleischwaren mit einem Anteil an bestimmten Milcherzeugnissen herzustellen, welche die genannten Nachteile vermeiden, geschmackliche Verbesserungen sowie Vorteile bezüglich der Herstellung, Konsistenz und Lagerfähigkeit im Vergleich mit der herkömmlichen "Jogurt-Wurst" aufweisen.

Gelöst wird diese Aufgabe durch die Verwendung von Frischkäseerzeugnissen in Kombination mit Magermilchpulver in bestimmten Mengen in Fleischwaren. Insbesondere wird diese Aufgabe gelöst durch ein Verfahren zur Herstellung von Fleischwaren, welches dadurch gekennzeichnet ist, dass in die Fleischmasse Frischkäseerzeugnisse in einer Menge von 10 bis 75 Gew.-%, bezogen auf die Fleischmasse, und 0,8 bis 2,0 Gew.-% Magermilchpulver, bezogen auf die Gesamtmasse, eingearbeitet werden.

Im Sinne dieser Erfindung umfasst der Begriff "Fleisch" alle Arten von Fleisch, z.B. Rind- und Schweinefleisch, aber auch Geflügel, wie etwa Hühnchen und Pute, das gleiche gilt für Wurstwaren. Im Sinne dieser Erfindung umfasst der Begriff "Fleischwaren" sowohl Wurstwaren als auch gewürzte Fleischarten/-zubereitungen, wie etwa Schinken, Lachsfleisch, Formfleisch, Frikadellen, Klopse u.dgl. Eine Fleischmasse gemäß der vorliegenden Erfindung besteht somit aus gegebenenfalls zerkleinertem Fleisch, sowie gegebenenfalls aus bei der Verwurstung üblicherweise hinzugegebenen Bindemitteln, Gewürzen u.dgl.

Frischkäseerzeugnisse umfassen unter anderem Frischkäse in verschiedenen Fettstufen (z.B. Rahm- und Doppelrahmfrischkäse), Speisequark in verschiedenen Fettstufen, insbesondere der Magerstufe, sowie Schichtkäse und Hüttenkäse. Bevorzugt wird Magerquark und magerer Hüttenkäse.

Als Magermilchpulver wird sprühgetrocknete Ware bevorzugt. Das Magermilchpulver wird erfindungsgemäß in trockener Form (also nicht vorgelöst) zugesetzt. Bei dem erfindungsgemäßen Verfahren wird Fleisch zerkleinert, gegebenenfalls unter Schüttung (Zugabe von Eis) weiterverarbeitet, wobei anschließend das Frischkäseerzeugnis und schließlich das Magermilchpulver hinzugegeben werden, gegebenenfalls unter Beimischung von üblichen Gewürzen und/oder Bindemitteln. Die so entstandene Masse kann dann im Falle der Wurstherstellung in herkömmliche Därme oder Kunstdärme abgefüllt und kann je nach Wurstsorte einer weiteren Behandlung unterzogen werden (siehe oben zur Herstellung von Koch-, Brüh- und Rohwurstwaren). Die erhaltene Rohmasse kann aber auch in anderer, dem Fachmann bekannter Weise fertig zubereitet werden.

Die Frischkäseerzeugnisse werden bevorzugt in einer Menge von 10 bis 50 Gew.-%, bezogen auf die Fleischmasse ohne Eis, mehr bevorzugt 25 Gew.-% bis 50 Gew.-% hinzugegeben.

Wie bereits erwähnt, kann bei dem erfindungsgemäßen Verfahren Schüttung verwendet werden, indem Eis in einer Menge von 10 bis 40 Gew.-%, bezogen auf die Fleischmasse hinzugegeben wird. Die Menge an zugegebener Schüttung kann wie bei herkömmlichen Verfahren variiert werden, bevorzugt sind 20 bis 35 Gew.-% Schüttung.

Vorzugsweise werden die Bestandteile, d.h. die Qualität des Fleisches und die Art des Milcherzeugnisses so gewählt, dass die fertige Fleischware einen Fettgehalt von 6 % oder weniger aufweist, bevorzugt weniger als 5 %, stärker bevorzugt weniger als 4 %. Daher wird bevorzugt Magerfleisch, insbesondere mageres Rindfleisch, Schweinebug und Geflügel verwendet. Gegebenenfalls wird auf die Zugabe von Fett oder stärker fetthaltigem Fleisch wie etwa Speck verzichtet. Bei Milcherzeugnissen wird darauf geachtet, dass der Fettgehalt möglichst niedrig ist.

Die in der Regel ebenfalls zugegebenen Gewürze können herkömmliche Gewürze sein, deren Zusammensetzung je nach Wurstsorte variiert. Besonders bevorzugt ist die in der DE 199 49 661.7 offenbarte Gewürzmischung.

Um die Konsistenz der Fleischware, insbesondere von Wurst zu verbessern, werden bevorzugt Bindemittel, z.B. Phosphate bei der Wurstherstellung zugegeben.

Das erfindungsgemäße Verfahren kann für alle drei der oben genannten Wurstwarenkategorien, sowie für weitere Fleischwaren angewendet werden. Es können auch zusätzlich bekannte Zutaten und Gewürzmischungen eingesetzt werden. Beispiele für weitere Zusätze bei Fleischwaren sind Gemüse, wie etwa Paprika, Zwiebeln, Pilze, Senfkörner, Pistazien u.dgl., z.B. zu Aufschnittwurst oder Semmelbrösel zu Frikadellen. Die erforderlichen Mengen können je nach Geschmack leicht ermittelt werden.

Ein weiterer Gegenstand der Erfindung ist eine Fleischware, welche dadurch gekennzeichnet ist, dass sie Frischkäseerzeugnisse in einer Menge von 10 bis 75 Gew.-%, bezogen auf den Fleischanteil, und 0,8 bis 20 Gew.-% Magermilchpulver enthält. Besonders bevorzugt sind fettarme Wurstwaren mit einem Fettgehalt von 6 % oder weniger, stärker bevorzugt weniger als 5 %, am stärksten bevorzugt weniger als 4 %.

Die folgende Rezeptur soll die Erfindung beispielhaft erläutern.

### Beispiel 1

### Aufschnittwurst/Wiener

4 kg Schweinebug wurde mit Hilfe eines Fleischwolfs (2 mm Scheibe) zerkleinert. Das Fleisch wird mit 20 g Nitritpökelsalz pro Kilogramm Fleisch und Fett und ca. 3 kg Eis bei ca. 6 °C angekuttert (Kuttermesser Größe 6). Anschließend wurden 3 kg Speisequark der Magerstufe hinzugegeben und die Masse gut durchmischt. Dann wurden 250 g sprühgetrocknetes Magermilchpulver trocken zugesetzt. Außerdem wurden weitere Zutaten (8 bis 12 g Gewürzmischung, 5 g Class-Super 0585 oder Frischomat-P 5527, 1 g Würzomat 5200, 6 g FSB Plus 5105, alle Angaben pro Kilogramm Fleisch und Fett) hinzugegeben und bis zur vollständigen Aufnahme weiterbearbeitet. Anschließend wurde die Masse abgefüllt (Kunstdärme oder Saitlinge Kal. 75 oder 90 oder 18/20). Die Weiterbehandlung bestand in Umröten, Räuchern (heiß bei 70 bis 75 °C), Brühen (20 Minuten bei 74 °C) und Abkühlen (warm, dann kalt duschen). Alle Produktbezeichnungen nach Fa. Wiberg Handwerk.

Diese Rezeptur wurde ebenfalls erfolgreich mit Hüttenkäse in entsprechender Menge durchgeführt.

## Patentansprüche

1. Verfahren zur Herstellung von Fleischwaren,
**dadurch gekennzeichnet,**
**dass** in die Fleischmasse Frischkäseerzeugnisse in einer Menge von 10 bis 75 Gew.-%, bezogen auf die Fleischmasse, und 0,8 bis 2,0 Gew.-% Magermilchpulver, bezogen auf die Gesamtmasse, eingearbeitet werden.

2. Verfahren nach Anspruch 1,
**dadurch gekennzeichnet,**
**dass** als Frischkäse Quark oder/und Hüttenkäse verwendet werden.

3. Verfahren nach Anspruch 1,
**dadurch gekennzeichnet,**
**dass** sprühgetrocknetes Magermilchpulver verwendet wird.

4. Verfahren nach einem der Ansprüche 1 bis 3,
**dadurch gekennzeichnet,**
**dass** der Frischkäse in einer Menge von 20 bis 50 Gew.-%, bezogen auf die Fleischmasse verwendet wird.

5. Verfahren nach einem der Ansprüche 1 bis 4,
**dadurch gekennzeichnet,**
**dass** bei der Verarbeitung der Fleischmasse Eis in einer Menge von 10 bis 40 Gew.-%, bezogen auf die Fleischmasse, verwendet wird.

6. Verfahren nach einem der vorhergehenden Ansprüche,
**dadurch gekennzeichnet,**
**dass** die Zutaten so gewählt werden, dass der Fettgehalt der Fleischware 6 % nicht übersteigt.

7. Verfahren nach einem der vorhergehenden Ansprüche,
**dadurch gekennzeichnet,**
**dass** Milchsäurebakterien in lebender oder getrockneter Form hinzugegeben werden.

8. Fleischware,
**dadurch gekennzeichnet,**
**dass** sie Frischkäseerzeugnisse in einer Menge von 10 bis 75 Gew.-%, bezogen auf den Fleischanteil, und 0,8 bis 20 Gew.-% Magermilchpulver enthält.

9. Fleischware nach Anspruch 8,
**dadurch gekennzeichnet,**
**dass** sie als Frischkäse Quark oder/und Hüttenkäse enthält.

10. Fleischware nach Anspruch 8 oder 9,
**dadurch gekennzeichnet,**
**dass** sie als Milcherzeugnis Schmelzkäse enthält.

11. Fleischware nach einem der Ansprüche 8 bis 10,
**dadurch gekennzeichnet,**
**dass** sie einen Fettgehalt von nicht mehr als 6 % aufweist.

## Claims

1. A process for the preparation of meat products, **characterised in that** fresh cheese products are incorporated into the meat composition in a quantity of 10 to 75% by weight, in relation to the meat composition, and 0.8 to 2.0 % by weight of skimmed-milk powder, in relation to the total composition.

2. A process according to Claim 1, **characterised in that** quark and/or cottage cheese are used as fresh cheese.

3. A process according to Claim 1, **characterised in that** spray-dried skimmed-milk powder is used.

4. A process according to any one of Claims 1 to 3, **characterised in that** the fresh cheese is used in a quantity of 20 to 50 % by weight, in relation to the meat composition.

5. A process according to any one of Claims 1 to 4, **characterised in that** during the processing of the meat composition ice is used in a quantity to 10 to 40 % by weight, in relation to the meat composition.

6. A process according to any one of the preceding Claims, **characterised in that** the ingredients are chosen so that the fat content of the meat product does not exceed 6 %.

7. A process according to any one of the preceding Claims, **characterised in that** lactic acid bacteria are added in live or dried form.

8. A meat product, **characterised in that** it contains the fresh cheese products in a quantity of 10 to 75 % by weight, in relation to the meat content, and 0.8 to 20 % by weight of skimmed-milk powder.

9. A meat product according to Claim 8, **characterised in that** it contains quark and/or cottage cheese as fresh cheese.

10. A meat product according to Claim 8 or 9, **characterised in that** it contains processed cheese as dairy product.

11. A meat product according to any one of Claims 8 to 10, **characterised in that** it has a fat content of not more than 6 %.

## Revendications

1. Procédé pour la fabrication de produits carnés,
**caractérisé en ce que**
dans la masse carnée, on introduit des produits de fromage frais dans une quantité de 1 à 75 % en poids, rapportée à la masse carnée, et 0,8 à 2,0 % en poids de poudre de lait écrémé, rapportée à la masse totale.

2. Procédé selon la revendication 1,
**caractérisé en ce que**
en tant que fromage frais, on utilise du fromage blanc ou/et du cottage.

3. Procédé selon la revendication 1,
**caractérisé en ce que**
on utilise de la poudre de lait écrémé séché par pulvérisation.

4. Procédé selon l'une des revendications 1 à 3,
**caractérisé en ce que**
le fromage frais est utilisé dans une quantité de 20 à 50 % en poids, rapportée à la masse carnée.

5. Procédé selon l'une des revendications 1 à 4,
**caractérisé en ce que**
lors du traitement de la masse carnée, on utilise de la glace dans une quantité de 10 à 40 % en poids, rapportée à la masse carnée.

6. Procédé selon l'une des revendications précédentes,
**caractérisé en ce que**
on choisit les additifs de telle sorte que la teneur en matière grasse du produit carné ne dépasse pas 6 %.

7. Procédé selon l'une des revendications précédentes,
**caractérisé en ce que**
l'on ajoute les bactéries d'acide lactique sous la forme vivante ou séchée.

8. Produit carné,
**caractérisé en ce que**
il contient des produits de fromage frais dans une quantité de 10 à 75 % en poids, rapportée à la portion carnée, et 0,8 à 20 % en poids de poudre de lait écrémé.

9. Produit carné selon la revendication 8,
**caractérisé en ce que**
en tant que fromage frais, il contient du fromage blanc ou/et du cottage.

10. Produit carné selon la revendication 8 ou 9,
**caractérisé en ce que**
en tant que produit laitier, il contient du fromage à tartiner.

11. Produit carné selon l'une des revendications 8 à 10,
**caractérisé en ce que**
il présente une teneur en matière grasse ne dépassant pas 6 %.
